# EUROPÄISCHE PATENTSCHRIFT

(11) **EP 1 856 684 B1**
(45) Veröffentlichungstag und Bekanntmachung des Hinweises auf die Patenterteilung: **13.06.2012**
(21) Anmeldenummer: 06723314.8
(22) Anmeldetag: 09.03.2006
(51) Int. Cl.: G02B 6/00, G09F 13/14, G09F 13/12, G09F 13/22, B60R 13/10, G09F 13/08

(54) **SELBSTLEUCHTENDE ANZEIGETAFEL UND VERFAHREN ZU IHRER HERSTELLUNG**
SELF-LUMINOUS INDICATOR PANEL AND METHOD FOR THE PRODUCTION THEREOF
PANNEAU D'AFFICHAGE LUMINESCENT ET SON PROCEDE DE PRODUCTION

(30) Priorität: 11.03.2005 AT 4202005
(43) Veröffentlichungstag der Anmeldung: 21.11.2007
(73) Patentinhaber: Schoenberg Elumic GmbH, 1150 Wien (AT)
(72) Erfinder: Novotny, Manfred, A-1110 Wien (AT)
(74) Vertreter: Puchberger, Peter
(86) Internationale Anmeldenummer: PCT/EP2006/002163
(87) Internationale Veröffentlichungsnummer: WO 2006/094802

(56) Entgegenhaltungen:
- EP-A- 1 512 583
- EP-A1- 0 870 978
- EP-A1- 0 913 626
- EP-A1- 1 477 368
- DE-A1- 3 825 436
- DE-A1- 4 311 018
- DE-A1- 10 247 708
- DE-A1- 19 964 069
- DE-U1- 9 207 253
- DE-U1- 29 815 721
- FR-A1- 2 848 942
- US-A- 1 937 957
- US-A- 3 973 342

## Beschreibung

Die vorliegende Erfindung bezieht sich auf Tafeln oder Anzeigetafeln, wie sie für amtliche Kennzeichentafeln bei Kraftfahrzeugen, für die Kennzeichnung von Gefahrengut, für Verkehrszeichen, wie Gefahrenzeichen, Vorschriftszeichen, Hinweiszeichen oder Zusatztafeln, für Überkopfwegweiser, für Anzeigetafeln im Innenbereich von Flughäfen und Bahnhöfen, für Verbotsschilder, für Warnschilder, für Werbetafeln und dergleichen verwendet werden. Insbesondere bezieht sich die Erfindung auf selbstleuchtende Tafeln für diese Zwecke und auf ein Verfahren zu ihrer Herstellung.

Kennzeichentafeln für Kraftfahrzeuge bestehen herkömmlicherweise aus einer geprägten Blechtafel, die an der Vorderseite eine reflektierende Schicht aufweist. Das amtliche Kennzeichen wird beim Prägen der Blechtafel und anschließendem Einfärben der geprägten Buchstaben- und/oder Nummernkombination gebildet. Gegebenenfalls kann die Kennzeichentafel noch eine transparente Schutzschicht und länderspezifische Farben aufweisen. Die reflektierende Schicht soll die Erkennbarkeit des Kennzeichens auch bei Dunkelheit ermöglichen. Nachteilig ist dabei, dass das Kennzeichen nur sichtbar wird, wenn es vom Scheinwerfer eines vorbeifahrenden Fahrzeuges direkt angestrahlt wird. Weiters ist für die an der Vorderseite eines Fahrzeugs angebrachte Kennzeichentafel üblicherweise keine fahrzeugeigene Beleuchtung vorgesehen, wodurch die Erkennbarkeit des Kennzeichens erschwert wird. Schließlich wird die Lesbarkeit des Kennzeichens häufig durch Verschmutzung der Kennzeichentafel beeinträchtigt.

Es wurden zahlreiche Versuche unternommen, Kennzeichentafeln mit indirekter Beleuchtung sowie selbstleuchtende Kennzeichentafeln zu entwickeln.

Aus DE 200 04 189 U1 ist eine elektrische Beleuchtung für ein Kraftfahrzeugkennzeichen bekannt geworden, bei der eine oder mehrere Lichtquellen an der vom Betrachter des Kennzeichens abgewandten Seite der Kennzeichentafel angeordnet sind, wobei die Kennzeichentafel aus einem lichtdurchlässigen Material gefertigt ist, auf dem die aus einem lichtundurchlässigen Material bestehenden Kennzeichenelemente fest haftend aufgebracht sind.

Aus DE 297 12 954 U1 ist ein Kennzeichenschild für Kraftfahrzeuge bekannt geworden, bei dem die Schildfläche oder die darin durch Prägung erzeugte Kennzeichnung zumindest teilweise transparent ist und zur aktiven Beleuchtung durch eine elektrisch aktivierbare Leuchtfolienanordnung hinterlegt ist.

Aus DE 200 22 563 U1 ist ein Kennzeichenschild für Kraftfahrzeuge bekannt geworden, das aus einem Grundkörper, einer darauf angeordnete Elektrolumineszenzfolie, einer über dieser Folie angeordneten Lichtscheibe und dem darüber angebrachten Kennzeichen aufgebaut ist, wobei die Leuchtfolie zusätzlich ein reflektierendes Mittel aufweist oder eine reflektierende Folie über der Leuchtfolie angebracht ist. Auch die Lichtscheibe kann als Reflektor ausgebildet sein.

Aus DE 102 47 708 A1 ist eine Kennzeichentafel mit elektrolumineszierendem Aufbau bekannt geworden, die einen eine erste elektrisch leitfähige Schicht aufweisenden Grundkörper, eine Schicht mit elektrolumineszierender Pigmentierung und eine zumindest teiltransparente zweite elektrisch leitfähige Schicht umfasst. Weiters kann die Kennzeichentafel noch eine transparente oder teiltransparente Schicht mit lichtreflektierenden Mitteln aufweisen. Die Kennzeichentafel ist jeweils mit einer transparenten Schutzschicht versehen. Die reflektierende Schicht oder die Schutzschicht ist zum Aufbringen von Buchstaben- und/oder Nummernkombinationen beschichtbar bzw. einfärbbar ausgebildet und der Grundkörper allein und/oder der Grundkörper mit zumindest der elektrolumineszierenden Schicht und der zweiten elektrisch leitfähigen Schicht ist prägefähig.

Aus US 2003/0 128 549 A1 ist eine Beleuchtungseinrichtung für Kennzeichentafeln bekannt geworden, die einen vor die Kennzeichentafel vorgesetzten Lichtleiter aufweist.

Aus EP 1 477 368 A1 ist eine selbstleuchtende Kennzeichentafel entsprechend der Präambel des Anspruchs 1 bekannt.

Aufgabe der Erfindung ist es, eine besser sichtbare Anzeigetafel anzugeben, bei der die Anwendungen (Prägung, Personalisierung) möglichst gleich wie bei derzeit üblichen Anzeigetafeln ist, d.h. mit vorhandenen Werkzeugen durchgeführt werden kann und bei der gegebenenfalls durch die mögliche Änderung der Farbgebung ein Zusatznutzen entsteht.

Die Erfindung löst die Aufgabe durch eine selbstleuchtende Anzeigetafel nach Anspruch 1. Diese Anzeigetafel, bei der ein selbstleuchtender Plattenkörper die anzuzeigenden Zeichen und/oder Symbole trägt, wobei der selbstleuchtende Plattenkörper einen durch eine oder mehrere LEDs zum Leuchten bringbaren, transparenten und/oder lichtleitenden Grundkörper bevorzugt aus thermoplastischen Kunststoff aufweist, der zumindest an der Rückseite mit einer reflektierenden Schicht versehen ist und der zumindest einen Teil des von der(den) LED(s) erzeugten Lichtes nach vorne abstrahlt, ist erfindungsgemäß dadurch gekennzeichnet, dass die reflektierende Schicht eine spiegelnde Schicht ist und dass weiters zumindest an der Vorderseite des Grundkörpers eine in Richtung der Rückseite zweite spiegelnde Schicht angeordnet ist, wobei diese Schicht Durchbrechungen aufweist, die den Lichtaustritt an der Vorderseite des Grundkörpers erlauben.

Die an der Rückseite des Grundkörpers angeordnete spiegelnde Schicht ist vorzugsweise eine zu 100 % spiegelnde Schicht.

Erfindungsgemäß kann die zweite spiegelnde Schicht beispielsweise eine zu 70 bis 90 % spiegelnde Schicht sein, und entsprechend 10 bis 30% Durchbrechungen aufweisen. Als ein weiteres erfindungsgemäßes Merkmal können die Seitenkanten des Grundkörpers eine nach innen gerichtete spiegelnde Schicht aufweisen.

Erfindungsgemäß kann auf der zweiten spiegelnde Schicht eine zumindest teiltransparente retroreflektierende Schicht angeordnet sein.

Erfindungsgemäß kann der Grundkörper aus einem transparenten thermoplastischen Kunststoff gebildet sein. Beispiele für geeignete Kunststoffe sind Polycarbonat, Polyester, ABS, PMMA und dergleichen.

Der Grundkörper kann erfindungsgemäß zur Verbesserung der Lichtleitung bzw. -diffusion mit lichtstreuenden Elementen, beispielsweise Glasfasern oder Glaskügelchen und dergleichen, versehen sein.

Als ein weiteres Merkmal der Erfindung kann über der retroreflektierenden Schicht eine transparente Schutzschicht angeordnet sein.

Erfindungsgemäß können am und/oder im Grundkörper eine oder mehrere LEDs angebracht sein. Alternativ dazu können eine oder mehrere LEDs zumindest in einem Teil des Randbereiches der Anzeigetafel, d.h. mindestens einem seitlichen und/oder dem oberen und/oder dem unteren Teil des Randbereiches, angeordnet sein. In einer Ausführungsform der Erfindung weist der Grundkörper Ausnehmungen für die Aufnahme der LEDs auf. In einer anderen Ausführungsform können eine oder mehrere LEDs entlang mindestens einem Teil des Randbereiches der Anzeigetafel an einer mit dieser dauerhaft verbundenen Trageleiste wie einer Printplatte, angeordnet sein, und mit dem Grundkörper fest verbunden sein.

Die erfindungsgemäße selbstleuchtende Anzeigetafel kann als selbstleuchtende Kennzeichentafel für Kraftfahrzeuge ausgestaltet sein. Eine solche erfindungsgemäße Kennzeichentafel ist kostengünstig herstellbar und im Rahmen eines Prägevorgangs verformbar. Es ist ein Vorteil der erfindungsgemäßen Kennzeichentafel, dass sie eine hohe Funktionssicherheit und Lebensdauer aufweist und keine Umstellung des derzeitigen Prägesystems und keinen Austausch der derzeitigen Werkzeuge notwendig macht.

Des weiteren betrifft die Erfindung ein Verfahren zur Herstellung einer Anzeigetrafel welches die folgenden Schritte umfasst:
- das Anordnen der LEDs sowie gegebenenfalls vorhandener Trageleiste in einer Form zur Herstellung des Grundkörpers,
- das Einspritzen des Kunststoffes zur Ausbildung des Grundkörpers,
- das Auftragen der spiegelnden Schichten, vorzugsweise durch Tauchen des polierten Grundkörpers in entsprechende Substanzen, wie Spiegellacke oder durch umseitiges Bedampfen,
- das Herstellen der Durchbrechungen an der Vorderseite des Grundkörpers durch mechanische oder chemische Behandlung der zweiten spiegelnden Schicht oder durch Aufbringen einer teilverspiegelten Schicht auf eine gegebenenfalls noch unverspiegelte Vorderseite des Grundkörpers,
- gegebenenfalls Aufbringen der retroreflektierenden Schicht auf die Vorderseite des Grundkörpers.

Insbesondere ist die Weiterverarbeitung der Kennzeichentafel, d.h. das Prägen und Hotmelt-Bedrucken der Zeichen bzw. Symbole, wie beispielsweise Buchstaben- und/oder Ziffernkombinationen, in den einzelnen Zulassungsstellen ohne das Erfordernis einer Änderung der üblichen Werkzeuge, Materialien oder Methoden möglich.

Weiters entspricht die erfindungsgemäße Kennzeichentafel den Forderungen der DIN 74069, wie beispielsweise die bisher zulässige Retroreflexion zu erfüllen und beliebige Farben, auch gleichzeitig, auf dem Grundkörper herzustellen.

Die Helligkeit einer selbstleuchtenden Kennzeichentafel wurde bisher in keiner der Anmelderin bekannten Norm beschrieben, sollte aber weder zu dunkel noch zu hell sein, da bei größeren Helligkeiten auch für die Sicherheit (Blendwirkung) eine negative Wirkung zu befürchten ist. Ein möglicher Richtwert für die Helligkeit könnte jene Helligkeit sein, die im Automobil als Tachometer-Hinterleuchtung benutzt wird, i.e. ca. 10 bis 20 cd/m².

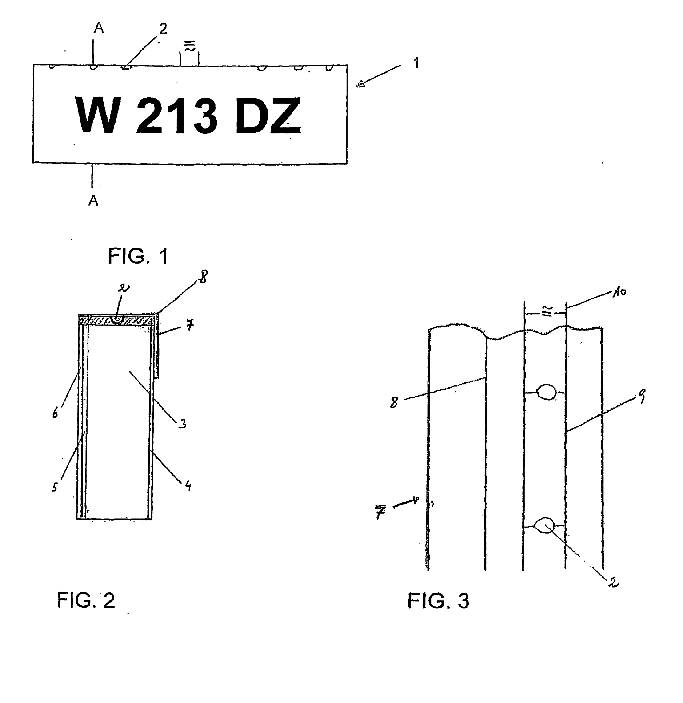

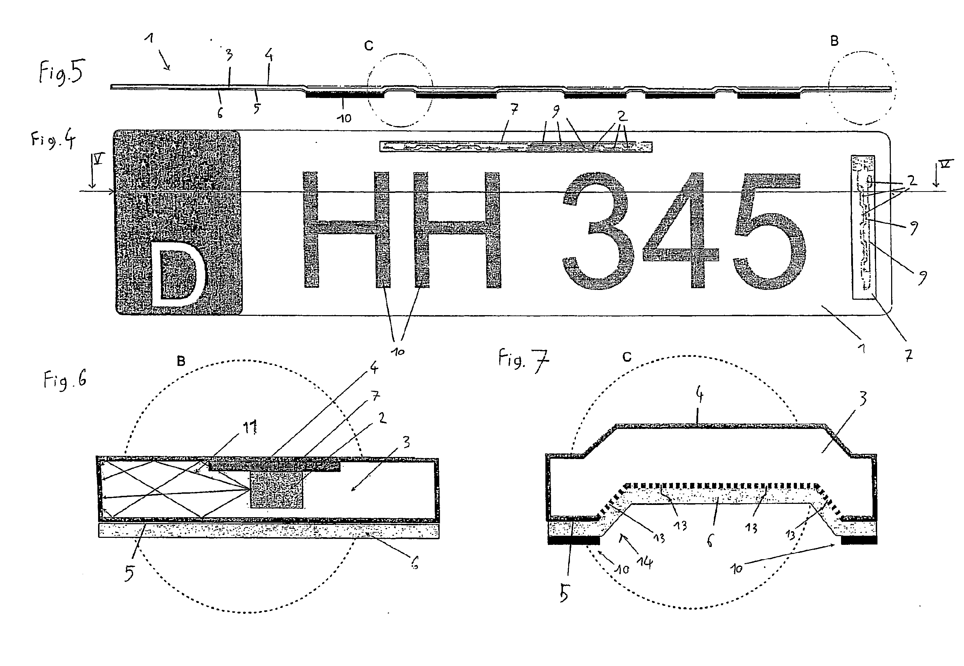

Nachstehend wird die Erfindung anhand von Ausführungsbeispielen unter Bezugnahme auf die Zeichnungen erläutert. Fig. 1 zeigt eine erfindungsgemäße Kennzeichentafel in Draufsicht. Fig. 2 zeigt einen Schnitt durch eine Ausführungsform einer erfindungsgemäßen Kennzeichentafel in Richtung der Linie A-A in Fig. 1. Fig. 3 zeigt einen mit Leiterbahnen versehenen Folienstreifen, der mit Leiterbahnen bedruckt und mit LEDs bestückt wurde. Fig. 4 zeigt eine Ausführungsform einer erfindungsgemäßen Kennzeichentafel in einer Draufsicht. Fig. 5 zeigt einen Querschnitt der Kennzeichentafel aus Fig. 4 geschnitten nach der Linie V-V. Fig. 6 zeigt eine Detailansicht des Ausschnitts B aus Fig. 5. Fig. 7 zeigt eine Detailansicht des Ausschnitts C aus Fig. 5.

### Beispiel:

Aus einer thermoplastischen und am Markt erhältlichen Kunststofftafel mit einer Dicke von beispielsweise 1-2 mm, bestehend aus einem geeigneten Material wie Polycarbonat, Polyester, ABS, PMMA oder einem ähnlichen transparenten und thermoplastischen Kunststoff, wird ein Grundkörper von beispielsweise 522 x 115 mm hergestellt. Als Vorteil kann sich erweisen, wenn das Material zur Lichtleitung bzw. Diffusion mit Glasfasern bzw. Glaskugeln gefüllt ist.

Alternativ könnte ein gespritzter Kunststoffkörper als Grundkörper Verwendung finden, der den Vorteil hätte, dass Vertiefungen für die LEDs bereits vorhanden sind und dass er auch mit Glasfasern oder Glaskugeln beliebiger Anteilsmengen gefüllt sein kann.

Zumindest in oder an einem Teil des Randbereiches des Grundkörpers, alternativ hinter dem Grundkörper, werden eine oder mehrere LEDs angebracht, wie weiter unten noch erläutert wird.

Auf der Vorderseite und auf der Rückseite wird der Grundkörper derart bearbeitet bzw. beklebt, dass die hohe Lichtausbeute der LEDs sich möglichst gleichmäßig in der Tafel verteilt. Auf der Vorderseite wird zusätzlich ein retroreflektierender und gleichzeitig semitransparenter Lack gedruckt oder eine entsprechende retroreflektierende Folie (z.B. 3M Scotchlite 6260 oder 6560) aufgeklebt. Zum Aufkleben der Folie kann beispielsweise ein Polyurethankleber zum Einsatz kommen, der die hohe Retroreflexion der retroreflektierenden Folie auf die geforderte Lichtdichte von 40-80 cd/m² reduziert und durch eine zusätzliche Farbfüllung auch zu einer gleichmäßigen Verteilung beiträgt. Bei Verwendung eines Lacks erfüllen der Binder des Lacks und die Glasfüllung die gleiche Funktion wie der Polyurethankleber bei der Folie.

Auf der Rückseite des Grundkörpers wird entweder ein Spiegellack gedruckt oder eine spiegelnde Folie aufgeklebt, um das Licht in dem Kunststoff zu führen und zu verteilen, wobei auch verhindert wird, dass Lichtverluste nach hinten entstehen.

Die Vorderseite des Grundkörpers ist als Lichtaustritt gedacht, wobei durch eine semireflektierende Schicht die Homogenität der Lichtdichte erreicht werden soll. Diese semireflektierende Schicht kann durch Aufrauung der Oberfläche durch Sandstrahlen, durch Bedruckung von semitransparenten Schichten oder bevorzugt durch Aufkleben von semitransparenten oder teilverspiegelten Folien erreicht werden.

Mittels des (gefüllten) transparenten Materials und der beidseitigen Beschichtung und der zusätzlich vorne angebrachten retroreflektierenden Folie soll die hohe Helligkeit der LEDs von 100-500 cd/m² auf 40-80 cd/m² reduziert und möglichst gleichmäßig verteilt werden. Dies wird erreicht, indem das Licht innerhalb des Kunststoffkörpers so lange reflektiert wird, bis das Licht als gleichmäßige, aber geringere Lichtmenge nach vorne austritt. Es ist ein Vorteil der Erfindung, dass die erfindungsgemäße selbstleuchtende Kennzeichentafel insbesondere bei Fahrbetrieb in der Dämmerung oder bei Nebel deutlich verbesserte Lesbarkeit des Kennzeichens gewährleistet.

Die Fig. 1 zeigt eine erfindungsgemäße Kennzeichentafel 1. An der Vorderseite, welche die dem Betrachter zugewandte Seite ist, sind Zeichen, beispielsweise eine Zahlen- und/oder Buchstabenkombination, sichtbar. Vorzugsweise sind an mindestens einem Teil des Randbereiches des Grundkörpers eine oder mehrere LEDs angeordnet. Der Grundkörper kann Ausnehmungen zum Aufnehmen der LEDs 2 aufweisen. Das Vorsehen von LEDs in verschiedenen Farben kann einen Zusatznutzen durch Veränderung der Farbe der Anzeigetafel bringen. ZB könnte die Farbe einer Kennzeichentafel bei Diebstahl des Fahrzeuges oder bei Geschwindigkeitsüberschreitung über GPS geändert werden, um die Fahrzeuge leichter ausfindig machen zu können.

Die Fig. 2 ist ein Schnitt durch eine erfindungsgemäße Kennzeichentafel in Richtung der Linie A-A in der Fig. 1. Der Grundkörper 3 ist an der Rückseite mit einer spiegelnden Schicht 4 versehen. An der Vorderseite sind eine teilweise spiegelnde Schicht 5 und eine zumindest teiltransparente retroreflektierende Schicht 6 angeordnet. In mindestens einem Teil des Randbereiches des Grundkörpers 3 sind Ausnehmungen für die Aufnahme der LEDs 2 vorgesehen. Diese LEDs 2 können sich auf einem Folienstreifen 7 befinden, wie er in Fig. 3 gezeigt ist, wobei dieser Streifen 7 aus einer flexiblen Printplatte mit darauf ausgebildeten Leitungsbahnen 9, die mittels SMD (Surface Mounted Device)-LEDs 2 bestückt wurde, geschnitten ist.

Die Verbindung der LEDs mit dem Grundkörper ist auf mehrere Arten möglich: Man kann sie an oder in mindestens einem Teil des Randbereiches anbringen oder hinter den Grundkörper kleben.

Das Anbringen an mindestens einem Teil des Randbereiches hat den Vorteil, dass die LEDs bei der späteren Prägung der Zahlen und/oder Buchstaben nicht stören. Man verwendet vorzugsweise LEDs mit einem geringen Abstrahlwinkel von ca. 3 bis 6°. Auf einer flexiblen Printplatte (z.B. Polyester) werden die Leiterbahnen 9 mittels Siebdruck hergestellt, mittels SMD (Surface Mounted Device) bestückt und in dünne Streifen geschnitten, die dann später mit dem Grundkörper verbunden werden. Die Streifen werden zweckmäßigerweise breiter als der Grundkörper 3 hergestellt, um die Kante des Grundkörpers nach hinten um die Faltlinie 8 umgelegt und mittels eines UV-härtenden Klebers verbunden. Sie stellen auch die Verbindung zur 12-V- bzw. 24-V-Versorgung 10 her. Solche Streifen 7 können auch in mehreren Teilen des Randbereiches angebracht werden.

Das Anbringen von einer oder mehreren LEDs in oder hinter dem Grundkörper erfordert LEDs mit größerem Abstrahlwinkel. Es sind LEDs mit Abstrahlwinkeln von 180° oder LEDs vom sogenannte Side-view-Typ, die eine Abstrahlung von 90° ermöglichen, erhältlich. Bei der Anbringung der LEDs von hinten, die bereits auf Platinen sitzen und die nur mehr an der Rückseite des Grundkörpers aufgeklebt werden müssen ist die Anbringung einfach und der Grundkörper kann dünner sein. Bei einer Anbringung der LEDs in oder hinter dem Grundkörper ist darauf zu achten, dass sie in einem Bereich angeordnet werden, wo sie nicht beim Prägen der Buchstaben- und/oder Ziffernkombination stören. Oder es muss der leuchtende Grundkörper von der retroreflektierenden Schicht getrennt werden, und in den Zulassungsstellen wird dann nicht der Grundkörper geprägt, sondern nur der retroreflektierende Teil der Kennzeichentafel. Dabei können Ziffern und Buchstaben aus gespritztem Kunststoff als Prägehilfe benutzt werden, die in der Folie verbleiben und für die notwendige Versteifung sorgen. Einer der Vorteile dieser Ausführungsform besteht darin, dass der leuchtende Grundkörper in allen Ländern gleich bleiben kann und nur die Oberfolie variieren muss. Das nachträgliche Zusammenkleben des leuchtenden Grundkörpers mit der geprägten Oberfolie in den Zulassungsstellen bedeutet nur einen geringen Mehraufwand.

In den eben beschriebenen Ausführungsformen werden die LEDs vorzugsweise von Ausnehmungen im Grundkörper aufgenommen, die danach mit einem Harz ausgefüllt werden können, um eine feste Verbindung zwischen den LEDs und dem Grundkörper sicherzustellen oder sie werden beim Herstellen des gegossenen Grundkörpers mit eingegossen, wie dies in Bezug auf die Fig.4 bis 7 beschrieben ist.

In einer alternativen Ausführungsform können eine oder mehrere LEDs in mindestens einem Teil des Randbereiches an einer mit der Kennzeichentafel bzw. dem Grundkörper dauerhaft verbundenen Trageleiste angeordnet sein.

Selbstverständlich kann die erfindungsgemäß ausgebildete Anzeigetafel auch als Tafel zur Kennzeichnung von Gefahrengut ausgestaltet sein. Die vorliegende Erfindung erlaubt es auch, Anzeigetafeln und Hinweisschilder, wie sie im Bereich des Straßen-, Bahn-, Schiffs- und Flugverkehrs Verwendung finden, als selbstleuchtende Anzeigetafel auszuführen. Dabei kann die jeweilige Leuchtkraft an die örtlichen Gegebenheiten angepasst werden. Ein weiteres Anwendungsgebiet für die erfindungsgemäße selbstleuchtende Anzeigetafel sind Werbetafeln, wobei das jeweilige Werbeplakat an der Vorderseite des selbstleuchtenden Bauteils der Anzeigetafel affichiert werden kann, so dass das Plakat als leuchtendes Plakat erscheint. Selbstverständlich können Schriftzug und/oder andere Zeichen auch auf der Vorderseite des selbstleuchtenden Bauteils der Anzeigetafel aufgebracht sein.

Die Fig. 4 zeigt eine Draufsicht auf eine weitere Ausführungsform einer erfindungsgemäßen Anzeigetafel. Eine derartige Kennzeichentafel 1 kann zB mittels eines erfindungsgemäßen Verfahrens wie folgt hergestellt werden. Die LEDs 2 können auf einem Flexprint Folienstreifen 7 mit darauf befindlichen Leiterbahnen 9 aufgebracht sein und in einer entsprechenden Form zur Herstellung des Grundkörpers angeordnet werden. In dem in Fig. 4 gezeigten Beispiel sind zwei mögliche Anordnungen der Folienstreifen 7, nämlich einmal oberhalb und einmal seitlich am Kennzeichen gezeigt. Durch Einspritzen des Kunststoffes in die Form wird der Grundkörper gebildet, mit welchem die LED bestückten Folienstreifen 7 dauerhaft verbunden sind.

Auf den gebildeten Grundkörper 3 werden nun die spiegelnden Schichten 4 und 5 aufgebracht. Dies kann zB durch Eintauchen des Grundkörpers in einen Spiegellack erfolgen, wobei auch die Seitenkanten des Grundkörpers verspiegelt werden. In Fig. 6 ist der Ausschnitt B aus Fig. 5 gezeigt, wobei ersichtlich ist, dass in diesem Abschnitt die LEDs 2 das Licht, dargestellt in Form von Lichtstrahlen 11, hauptsächlich seitlich in Längsrichtung des Grundkörpers abstrahlen. Die Lichtstrahlen 11 werden an den spiegelnden Schichten 4, 5 sowie an den seitlichen Verspiegelungen im Grundkörper 3 immer wieder reflektiert, wodurch es zu einer gleichmäßigen Durchleuchtung des Grundkörpers 3 kommt.

Durch die Herstellung von Durchbrechungen 13, zB durch Mikroperforation mittels eines Lasers in der zweiten vorderen spiegelnden Schicht 5 kann der Lichtaustritt aus dem Grundkörper 3 gezielt gesteuert werden. Dies ist in Fig. 7, der den Abschnitt C aus Fig. 5 entspricht, detailliert darstellt.

Der so hergestellt Grundkörper 3 wird an der Vorderseite mit einer retroreflektierenden Schicht 6 versehen und kann in dieser Form an die Zulassungsstellen ausgeliefert werden.

In den Zulassungsstellen erfolgt unter Verwendung der herkömmlichen Werkzeuge das Prägen des Kennzeichens, was zu den in Fig. 5 sowie Fig. 7 gezeigten Erhöhungen 14 führt. Weiters wird das Aufbringen von Aufdrucken 10 auf den geprägten Grundkörper 3 in herkömmlicher Weise in der Zulassungsstelle vorgenommen.

Zur zusätzlichen Formstabilität der Anzeigetafel kann beim Pressen in der Prägemaschine eine Randverstärkung mitgeprägt werden. Dementsprechend ist es von Vorteil wenn die mit LEDs 2 bestückten Folienstreifen 7 etwas beabstandet zum Rand angeordnet sind, damit sie während des Prägevorgangs nicht beschädigt werden.

## Patentansprüche

1. Selbstleuchtende, im Rahmen eines Prägevorgangs verformbare Anzeigetafel, bei der ein selbstleuchtender Plattenkörper an der Sichtfläche die anzuzeigenden Zeichen und/oder Symbole trägt, insbesondere eine selbstleuchtende Kennzeichentafel für Kraftfahrzeuge, wobei der selbstleuchtende Plattenkörper eine oder mehrere LEDs und einen durch diese zum Leuchten bringbaren, transparenten oder lichtleitenden Grundkörper (3) bevorzugt aus thermoplastischem Kunststoff aufweist, der an der Rückseite mit einer reflektierenden Schicht versehen ist und einen Teil des von der LED oder den LEDs erzeugten Lichtes nach vorne abstrahlt, wobei die an der Rückseite angeordnete reflektierende Schicht eine spiegelnde Schicht (4) ist und dass weiters zumindest an der Vorderseite des Grundkörpers (3) eine in Richtung der Rückseite zweite spiegelnde Schicht (5) angeordnet ist, **dadurch gekennzeichnet, dass** diese Schicht (5) Durchbrechungen aufweist, die den Lichtaustritt an der Vorderseite des Grundkörpers (3) erlauben, wobei auf der zweiten spiegelnden Schicht (5) eine zumindest teiltransparente retroreflektierende Schicht (6) angeordnet ist und im Grundkörper eine LED oder mehrere LEDs angebracht sind, wobei die LEDs im Bereich der Seitenkanten des Grundkörpers beabstandet zum Rand angeordnet sind.

2. Anzeigetafel nach Anspruch 1, **dadurch gekennzeichnet, dass** die zweite spiegelnde Schicht (5) auf Grund von 10 bis 30% Durchbrechungen eine zu 70 bis 90 % spiegelnde Schicht ist.

3. Anzeigetafel nach Anspruch 1 oder 2, **dadurch gekennzeichnet, dass** die Seitenkanten des Grundkörpers (3) eine nach innen gerichtete spiegelnde Schicht aufweisen.

4. Anzeigetafel nach einem der Ansprüche 1 bis 3, **dadurch gekennzeichnet, dass** der Grundkörper (3) lichtstreuende Elemente, wie Glasfasern, Glaskügelchen oder dergleichen enthält.

5. Anzeigetafel nach einem der Ansprüche 3 oder 4, **dadurch gekennzeichnet, dass** über der retroreflektierenden Schicht (6) eine transparente Schutzschicht angeordnet ist.

6. Anzeigetafel nach einem der Ansprüche 1 bis 5, **dadurch gekennzeichnet, dass** die LEDs auf einer Trageleiste, wie einer flexiblen Printplatte, angeordnet und mit dem Grundkörper (3) fest verbunden sind.

7. Verfahren zur Herstellung einer Anzeigetafel nach einem der Ansprüche 1 bis 6, **dadurch gekennzeichnet, dass** es folgende Schritte umfasst:
- Anordnen der LEDs sowie gegebenenfalls vorhandener Trageleiste in einer Form zur Herstellung des Grundkörpers (3),
- Einspritzen des Kunststoffes zur Ausbildung des Grundkörpers,
- Auftragen der spiegelnden Schichten, vorzugsweise durch Tauchen des polierten Grundkörpers in entsprechende Substanzen, wie Spiegellacke oder durch umseitiges Bedampfen,
- Herstellen der Durchbrechungen an der Vorderseite des Grundkörpers durch mechanische oder chemische Behandlung der spiegelnden Schicht (5)oder durch Aufbringen einer teilverspiegelten Schicht auf eine noch unverspiegelte Vorderseite des Grundkörpers (3),
- gegebenenfalls Aufbringen der retroreflektierenden Schicht auf die Vorderseite des Grundkörpers (3).

8. Verfahren nach Anspruch 7, **dadurch gekennzeichnet, dass** es zusätzlich folgende Schritte umfasst:
- Prägen des hergestellten Grundkörpers durch Pressen
- Bedrucken des geprägten Grundkörpers an der Vorderseite.

## Claims

1. Self-illuminated indicator panel that can be deformed within the scope of an embossing process, wherein a self-luminous board element carries, on the visible surface, the characters and/or symbols that are to be displayed, particularly a self-luminous number plate for motor vehicles, wherein the self-luminous board element comprises one or more LEDs and a base member (3), preferably of thermoplastic plastics, that is transparent or light-conducting or can be made to luminesce by said LEDs, which is provided on its reverse side with a reflecting layer and radiates forward some of the light produced by the LED or LEDs, while the reflecting layer provided on the reverse side is a reflective layer (4) and moreover at least on the front side of the base member (3) is provided a second reflective layer (5) that reflects in the direction of the reverse side, **characterised in that** this layer (5) has openings which allow light to emerge on the front side of the base member (3), while on the second reflective layer (5) is provided an at least semitransparent retroreflective layer (6) and in the base member is mounted one LED or a plurality of LEDs, the LEDs being arranged in the region of the side edges of the base member at a spacing from the margin.

2. Indicator panel according to claim 1, **characterised in that** the second reflective layer (5) is a 70 to 90% reflective layer, on account of 10 to 30% openings.

3. Indicator panel according to claim 1 or 2, **characterised in that** the side edges of the base member (3) comprise an inwardly directed reflective layer.

4. Indicator panel according to one of claims 1 to 3, **characterised in that** the base member (3) contains light-scattering elements such as glass fibres, glass beads or the like.

5. Indicator panel according to one of claims 3 or 4, **characterised in that** a transparent protective layer is arranged over the retroreflective layer (6).

6. Indicator panel according to one of claims 1 to 5, **characterised in that** the LEDs are arranged on a carrier strip, such as a flexible printed circuit board, and are fixedly attached to the base member (3).

7. Method of producing an indicator panel according to one of claims 1 to 6, **characterised in that** it comprises the following steps:
- arranging the LEDs and any carrier strip provided in a mould for producing the base member (3),
- injecting the plastics to form the base member,
- applying the reflective layers, preferably by immersing the polished base member in corresponding substances such as reflective paints or by vapour-coating the reverse,
- producing the openings on the front side of the base member by mechanical or chemical treatment of the reflective layer (5) or by the application of a partly reflective layer on a front side of the base member (3) that has not yet been made reflective,
- optionally applying the retroreflective layer to the front of the base member (3).

8. Method according to claim 7, **characterised in that** it additionally comprises the following steps:
- embossing the manufactured base member by pressing
- printing the embossed base member on the front side.

## Revendications

1. Panneau d'affichage auto-luminescent qui, peut être déformé dans une opération d'estampage et dans lequel un corps auto-luminescent en plaque porte sur la face visible les signes/ou les symboles à afficher, notamment plaque d'immatriculation auto-luminescente pour des véhicules automobiles, dans lequel le corps auto-luminescent en plaque comporte une ou plusieurs DEL et un corps (3) de base, transparent ou conduisant la lumière, qui peut devenir lumineux par celles-ci, de préférence en une matière plastique thermoplastique, qui est pourvu sur la face arrière d'une couche réfléchissante et qui émet vers l'avant une partie de la lumière produite par la DEL ou par les DEL, la couche réfléchissante disposée sur la face arrière étant une couche (4) de miroir et en ce qu'en outre une deuxième couche (5) de miroir est disposée sur la face avant du corps (3) de base dans la direction de la face arrière, **caractérisé en ce que** cette couche (5) comporte des traversées qui permettent à la lumière de sortir sur la face avant du corps (3) de base, une couche (6) rétro réfléchissante et transparente au moins en partie étant disposé sur la deuxième couche (5) de miroir et une DEL ou plusieurs DEL sont misses dans le corps de base, les DEL étant mises dans la zone des bords latéraux du corps de base à distance du bord.

2. Panneau d'affichage suivant la revendication 1, **caractérisé en ce que** la deuxième couche (5) de miroir est, en raison de 10 à 30% de traversées, une couche de miroir à 70 à 90%.

3. Panneau d'affichage suivant la revendication 1 ou 2, **caractérisé en ce que** les bords latéraux du corps (3) de base ont une couche de miroir dirigée vers l'intérieur.

4. Panneau d'affichage suivant l'une des revendications 1 à 3, **caractérisé en ce que** le corps (3) de base contient des éléments de dispersion de la lumière, comme des fibres de verre, des billes de verre ou analogues.

5. Panneau d'affichage suivant l'une des revendications 3 ou 4, **caractérisé en ce qu'**une couche transparente de projection est disposée au dessus de la couche (6) rétroréfléchissante.

6. Panneau d'affichage suivant l'une des revendications 1 à 5, **caractérisé en ce que** les DEL sont disposées sur une réglette de support, comme une plaque d'impression souple, et sont reliées solidement au corps (3) de base.

7. Procédé de fabrication d'un panneau d'affichage suivant l'une des revendications 1 à 6, **caractérisé en ce qu'**il comprend les stades suivantes :
- on met les DEL ainsi que la réglette de support présente éventuellement dans un moule pour la fabrication du corps (3) de base,
- on injecte la matière plastique pour la formation du corps de base,
- on dépose des couches de miroir, de préférence par immersion du corps de base poli dans des substances adéquates, comme des vernis de miroir, ou par métallisation de l'autre côté,
- on ménage des traversées sur la face avant du corps de base par traitement mécanique ou chimique de la couche (5) de miroir ou par dépôt d'une couche en partie en miroir sur une face avant, qui n'est pas encore en miroir, du corps (3) de base,
- on dépose le cas échéant la couche rétroréfléchissante sur la face avant du corps (3) de base.

8. Procédé suivant la revendication 7, **caractérisé en ce qu'**il comprend en outre les stades suivantes :
- estampage à la presse du corps de base fabriqué,
- impression sur la face avant du corps de base estampé.
